# EUROPEAN PATENT SPECIFICATION

(11) **EP 3 206 525 B1**
(45) Date of publication and mention of the grant of the patent: **25.11.2020**
(21) Application number: 15784097.6
(22) Date of filing: 06.10.2015
(51) Int. Cl.: A45D 20/12

(54) **A HOOD HAIR DRYER ATTACHMENT**
HAUBENHAARTROCKNERVERBINDUNG
CONNECTION POUR CASQUE SÈCHE-CHEVEUX

(30) Priority: 06.10.2014 GB 201417642
(43) Date of publication of application: 23.08.2017
(73) Proprietor: Hair Flair Limited, Croydon, Surrey CR9 5AY (GB)
(72) Inventor: TAYLOR, Bruce Hamilton, 34970 Lattes (FR)
(74) Representative: Bennett, Adrian Robert J.
(86) International application number: PCT/GB2015/052915
(87) International publication number: WO 2016/055776

(56) References cited:
- WO-A1-2008/071193
- DE-A1- 2 336 057
- DE-A1- 2 336 057
- KR-B1- 101 182 631
- US-A- 2 466 915
- US-A- 2 575 841
- US-A1- 2007 137 060

## Description

The invention relates to a hood hair dryer attachment and particularly, but not exclusively, to a hood hair dryer attachment for drying hair containing a hair curling accessory, and to a method of using such a hood hair dryer attachment.

With public focus on personal appearance increasing, many people are turning to home-use products as a cost-efficient and easy way of giving their hair a salon-like appearance. For example, many people, including mobile hair dressers are using home hair curling accessories as a way of achieving curls without their hair being exposed to the heat of a traditional curling iron, which can produce a level of heat that can potentially damage their hair. When using such hair curling accessories sections of damp hair are either wound around, or drawn through, the accessories and the hair is then left to dry naturally or overnight. Once the hair is dry, and the curling accessories are removed, the resulting hair has the desired curls.

If it is undesirable to wait for their hair to dry naturally, a user may want to use a hair dryer attachment that uses heat from a conventional hand held hair dryer to accelerate the drying process. Such attachments typically comprise a head unit for placement over the user's head in a manner that surrounds their hair, and a hose which extends from the head unit for attachment to the nozzle of a hair dryer. When the hair dryer is switched on, hot air expelled from the hair dryer flows through the hose and into the head unit. The hot air exits the head unit via a number of ventilation holes provided in the inner wall and is directed toward the user's head to dry their hair. Such attachments usually have the ability to be folded or packed flat for ease of transport and storage. Some hair dryer attachments are not large enough to accommodate a full head of hair including hair curling accessories which can lead to inefficient drying of the hair.

When the hot air from the hose enters the head unit and is directed onto the user's hair through the ventilation holes there may be localised 'hot spots'. For example, sections of the user's hair close to the hot air entry points may become substantially hotter than the remainder of the user's head. If the hot air is inefficiently distributed, for example through the use of a head unit which does not adequately cover the hair of a user, or the distribution of air through the ventilation holes is inadequate, these hot spots receive more air than others, leaving other localised 'cool spots' that can remain damp while the hair in the hot spots dries quickly. Over time, this can result in the localised hot spots reaching an uncomfortably high temperature, and the user can be forced to remove the apparatus before their entire head is dry or experience a longer drying time than could otherwise be achieved.

When the attachment is placed on the user's head and the hair dryer is switched on, the force of the hot air circulating through the head unit may be enough to blow the unit off the user's head, or it may simply slip off. Additionally, in order for the hot air from the hair dryer to be directed toward the user's head, the end of the hose needs to be firmly secured to the nozzle of the hair dryer. The connector point of the hose of a typical hood hair dryer attachment is comprised of a fabric tube supported by a nylon spring stitched into the tube. The hose is attached to the hair dryer by an elasticated collar. Regrettably, this frequently provides an unreliable connection. If the collar is too large it can slide off the nozzle of the hair dryer, or even be too loose to fit tightly. If the collar is too small it may slide off the nozzle during use or not fit at all. The user may therefore be forced to secure the collar to the nozzle with their hands or other means. The above problems may render the hair dryer attachment cumbersome and uncomfortable to use. For example, the user may have to sit as still as possible so as to avoid any movement that could cause the hose to detach from the hair dryer or the head unit to fall off.

When the attachment is in use, the user can hold the handle of the hair dryer so that the stream of air exiting the hair dryer is directed into and through the hose. From the hose, the air will enter the head unit and be directed onto the user's hair through the ventilation holes. Depending upon the volume of hair to be dried, the drying process can take up to 45 minutes and keeping their arm elevated can lead to the user becoming fatigued. However, if the user were to place the hair dryer on a flat surface, then the tension in the hose can pull the hose off the hair dryer and could cause the hair dryer to fall to the ground. A hood hair dryer attachment according to the preamble of claim 1 is for instance known from DE 23 36 057 A1.

It is an object of the present invention to provide a more convenient attachment.

In a first aspect, the invention provides a hood hair dryer attachment as set out in claim 1.

Here, by the term "friction-enhancing material" is meant a material that has a higher coefficient of friction than the material of the remainder of the hose. By the term "hair dryer" is meant an electromechanical device that blows either cool or heated air from an air delivery conduit. The air delivery conduit of a hair dryer may be referred to as a nozzle.

The present invention provides a hood hair dryer attachment with a hose comprising a collar with a friction-enhancing material allowing a hair dryer to be firmly retained within the hose, thereby reducing the risk of detachment. The hood, in use, preferably covers the majority of, and more preferably substantially all of, the head of hair of a user.

By providing a hose comprising a friction-enhancing material at the end that mounts the air delivery conduit of the hair dryer, the hose can no longer easily become detached from the hair dryer. The user therefore no longer needs to be fearful of a build-up of pressure within the hose, or movement in general, that may cause the hose to slide off the nozzle of the hair dryer.

The inclusion of the friction-enhancing material thus allows for a more convenient hood hair dryer attachment than those known in the art, as the nozzle of the hair dryer will be frictionally retained within the collar. The friction-enhancing material enhances the connection between collar and nozzle and allows a longer hose to be used which can allow a user to place the hair dryer on a surface so they don't need to hold it during the drying process. The friction-enhancing material therefore allows for more freedom of movement, as the user no longer has to sit still for fear of causing the collar to detach from the nozzle. Longer hoses may be more prone to bending or kinking, causing a backpressure that force the hair dryer out of the hose. However, the friction-enhancing material will ensure that the hair dryer will continue to be retained within the hose even during such backpressure events.

The hood and hose are preferably made from a flexible and/or washable material. This allows for the attachment to be stored and transported easily, as well as the hood to adopt or fit the contours of the user's head and/or hair. By making the hood and hose from a washable material a user can more easily maintain the hood and hose in a hygienic condition.

Advantageously, the hood hair dryer attachment further comprises a fabric material, for example a nylon material. This allows for the attachment to be comfortably worn by the user.

Preferably, the inner and outer walls of the hood are substantially drum shaped, having a substantially cylindrical side wall with a top cover, or crown, which may be integrally formed with the side wall. This allows for the shape of the interior of the hood to complement that of a user's head. The drum shape may be divided into six individual panel sections, with a further three panels forming the substantially dome shaped crown, separated by means of partially stitching the inner and outer walls together. This prevents "ballooning" between the double walls, when the hair dryer is switched on

Advantageously, the configuration of the plurality of holes in the inner wall includes holes arranged in rows or columns over the crown and around the hood. Preferably, the plurality of holes in the inner wall are holes substantially equidistantly spaced apart. This helps to ensure that the air from the conduit entering the hood via hose and air channel is substantially evenly and substantially equally directed toward the user's head. The holes in the inner wall of the hood may be die-cut, but could be formed by other methods.

Preferably, the number of holes in the inner wall is above 75. Preferably, the number of holes is between 75 and 200. Advantageously, the number of holes is between 125 and 160. Most preferably, the number of holes is exactly 147.

This ensures that air is directed to the majority of the user's head, reducing the likelihood of localised hot or cool spots in the user's hair. In turn, the user's hair dries in a more effective, efficient and timely manner.

Preferably, the holes are substantially circular. Preferably, the diameter of the holes is between 5mm and 8mm and more preferably between 5mm and 6mm.

Advantageously, the length of the hose is at least 50cm. Preferably, the length of the hose is at least 80cm. Advantageously, the length of the hose is substantially 100cm.

In some preferred embodiments it may be desirable to close off or otherwise restrict the number of holes in certain areas of the inner wall. For example, depending on the needs of the user, in some embodiments a number of holes located approximately in the vicinity of the user's ears when the attachment is in use may be blocked off, closed off or otherwise not present. This means that air may still be directed to the majority of the user's head but with a lower probability that the ears of the user will become uncomfortably hot from prolonged use. Although any number of holes may be closed off or restricted depending on the needs of the user in some embodiments, four holes from each of the bottom rows of holes on either side of the inner wall (that may be substantially opposing sides) may be blocked off, i.e. a total of twenty-four holes may be blocked off. It will be readily apparent that rather than actively 'closing off' or 'blocking off' a pre-formed hole it is also contemplated that these holes will simply not be present in the hood in the first place, and that any number of holes that would be disposed around the user's ears when the hood is worn may simply be missing from the design of the inner wall. This will, of course, depend on the method of manufacture. It will also be readily apparent that it is contemplated that any number of holes may be closed/blocked off or otherwise missing from the design of the inner wall in order to reduce the amount of heat on the user's ears.

In such embodiments, the result is that the holes on the inner wall form a pattern on the inner wall, the pattern containing fewer or no holes, or holes with greater spacing therebetween, in areas of the inner wall that would be disposed around the ears of the user when the hood is worn. The configuration of the plurality of holes in the inner wall in these embodiments may still include holes arranged in rows or columns over the crown and around the hood, substantially equidistantly spaced apart - with the exception of those areas of the hood which be near the user's ears when the hood is worn. This helps to ensure that the air from the conduit entering the hood via hose and air channel is substantially evenly and substantially equally directed toward the user's head but that the user's ears do not become unpleasantly hot.

In such embodiments, the number of holes is between 50 and 175. Advantageously, the number of holes is between 100 and 145. Most preferably, the number of holes is exactly 123.

A hose of this length allows the user more freedom of movement. The user is no longer required to hold the hair dryer throughout the drying process since the hose is long enough for the hair dryer to be set aside on a nearby surface, without risk of the tension in the hose pulling the hair dryer off the surface, or putting strain on the connection and pulling the collar off the nozzle of the hair dryer.

The hose is preferably substantially tubular, although other shapes could be used. The hose also preferably comprises a flexible and/or a fabric material. Here, by "hose" is meant a conduit through which air can flow. For example, the hose may be a substantially tubular member, substantially uniform in both length and cross section; or the hose could be a hollow passage with accordion-like walls for ease of collapsing.

The friction-enhancing material comprises a ring, or strip, stitched or glued into the inside surface of the collar of the hose. Preferably the strip is stitched along its opening edges into the inner surface of the collar. The strip may be double stitched into the collar, for example along top and bottom edges of the strip. This ensures that the material stays in shape, preferably a substantially circular shape, and secured to the collar.

The collar is resiliently circumferentially expandable so as to enable it to be fitted over the air delivery conduit of a hair dryer. The friction-enhancing material on the inside surface of the collar ensures that the air delivery conduit of the hair dryer will be frictionally retained within the hose, reducing the risk of the hose slipping off the hair dryer.

Preferably, any gap between the two ends of the strip when stitched into the collar is less than, or substantially, 2mm at rest.

The friction-enhancing material comprises an elastomeric material. As elastomeric materials have a relatively high coefficient of friction, this adds to the ability of the hose to frictionally retain the air delivery conduit of the hair dryer. The elastomeric material comprises silicone rubber which has a relatively high coefficient of friction and also has good heat insulation properties, which insulates the hands of the user when removing the collar from the hair dryer after use.

The thermal and chemical properties of silicone rubber ensure that it will not react with any materials it is likely to come into contact with, and will not get uncomfortably hot for the user when the attachment is in use and the hair dryer is blowing hot air. Additionally, silicone rubber has the ability to form a substantially airtight seal, reducing the amount of air that may escape through the seal between the hair dryer nozzle and the collar of the hose. Silicone rubber also has low thermal conductivity, low toxicity, low chemical reactivity, and adheres well to plastics, metals and the like, as are typically found in most hair dryers.

Preferably, the hood hair dryer attachment further comprises an adjustable chin strap for securing the hood to the head of the wearer. Preferably, the hood comprises a drawstring for tightening extremities of the hood, for example a lower perimeter, to better secure it to the wearer.

In some embodiments where the number of holes on the inner wall is restricted at locations corresponding to the ears of the user when the hood is worn, this location may correspond to the areas of the hood immediately above where the draw string is attached to the hood. I.e., the amount of holes is reduced in the immediate vicinity of where the draw string is attached to the hood The draw string is typically attached to the hood at two points, roughly corresponding to the area in the vicinity of the ears of the user when the hood is worn and so the draw string is typically attached to the hood at two substantially opposite sides. Therefore, in such embodiments the number of holes in the inner wall is restricted at two substantially opposite locations on either side of the hood immediately above where the draw string is attached to the hood.

In a second aspect, the present invention provides a method of attaching a hood hair dryer attachment to a hand held hair dryer, the hood hair dryer attachment comprising: a hood for covering at least a part of a head of a user, the hood having spaced apart inner and outer walls defining an air channel therebetween, wherein the inner wall comprises a plurality of holes for directing air from the air channel onto a head of a user; a hose connected at a first end to the outer wall of the hood and in communication with the air channel, said hose comprising a collar at a second end for mounting to an air delivery conduit of a hair dryer, said collar being resiliently circumferentially expandable and comprising a friction-enhancing material exposed on an inner surface of the collar for contacting a surface of the air delivery conduit of a hair dryer; the method comprising the step of: mounting the collar at the second end of the hose on an air delivery conduit of a hand held hair dryer; wherein the hand held hair dryer is frictionally retained in the second end of the hose by the collar.

The attachment comprises an air channel defined between an inner and outer wall and the inner wall comprises a plurality of holes for directing air into and through the hair of the user. This structure and configuration of the holes allows for air to be circulated through the channel and, via the holes, to be distributed evenly around the user's head, increasing drying efficiency and reducing the risk of hot spots and uneven drying of the user's hair.

Preferably, the attachment comprises a drawstring and an adjustable chin strap. The drawstring allows extremities of the hood, for example a lower perimeter or rim, to be fitted to the user, for example around the forehead and the hairline, resulting in minimal air escaping from the hood. The chin strap further allows the hood to be secured to the user's head in a manner that prevents it slipping or otherwise falling off.

A better understanding of the present invention will be obtained from the following detailed description of a preferred embodiment. The description is given by way of example only and makes reference to the accompanying drawings in which:
Figure 1 is a perspective view of a hood hair dryer attachment in use according to a first embodiment of the present invention;
Figure 2 is a cut-out view of the hood of the hood hair dryer attachment according to Figure 1;
Figure 3 is a side view of a collar of the hose of a hood hair dryer attachment according to Figure 1; and
Figure 4 is a perspective view of the inside of the hose of a hood hair dryer attachment according to a second embodiment of the present invention.

The orientations top, side, above, below etc. are taken from an arbitrary datum and are intended solely to simplify the description below.

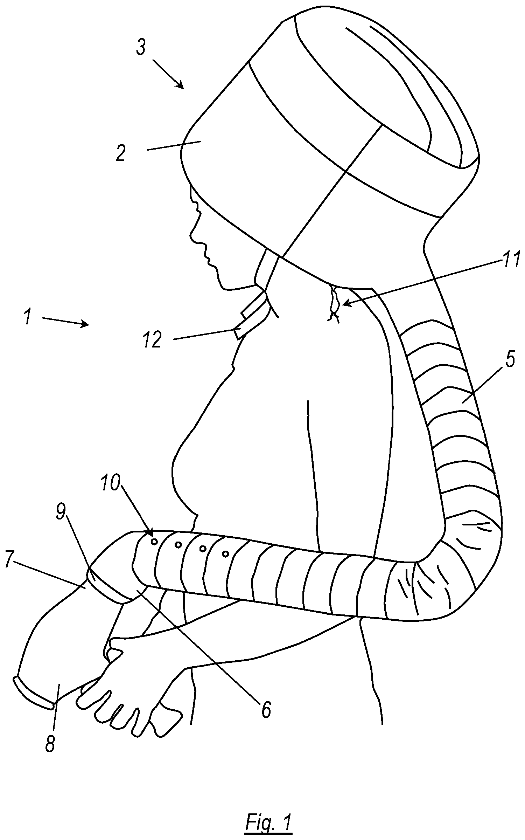

A hood hair dryer attachment 1 according to the present invention is shown, in use, in Figure 1. As is typical, the hood hair dryer attachment 1 comprises a hood 3 and a hose 5. The hood 3 is substantially drum shaped with a dome shaped crown. The hose 5 is attached to the hood 3 at one end, and comprises a collar 6 for mounting to the air delivery conduit 7 of a hair dryer 8.

The hood 3 and hose 5 comprise a flexible, fabric, material that allows the hood hair dryer attachment to be folded and/or packed flat for ease of transportation and storage.

A number of ventilation holes 10 are representatively illustrated in the hose 5. It is envisaged that that ventilation holes will be located at the collar 6 of the hose 5 that will be mounted to the hair dryer 8 but any number of holes could equally be provided in any location on the hose 5. The ventilation holes 10 will prevent overheating in the event that the hose 5 bends or kinks in such a way so as to cause a significant backpressure event on the hair dryer 8. In preference, or in addition, to the ventilation holes 10, a ventilation structure may also be provided in the outer wall 2 of the hood 3, providing further means for the hot air to exit the hood 3.

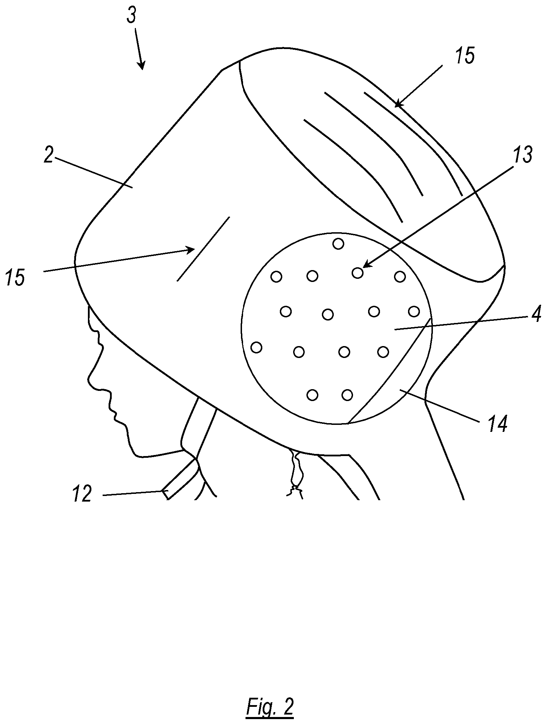

Referring additionally to Figure 2, a cut-out view of the hood 3 of the attachment 1 according to Figure 1 is shown. The hood 3 comprises an inner wall 4 and an outer wall 2 that are spaced apart to define an air channel 14 therebetween. The hood 3 is divided into six panels around the drum and three panels over the crown and includes stitching lines 15 partially stitching the walls together.

In use, hot air from the hair dryer 8 will be routed to the user's head via the air channel 14 as will be described later. Both the inner wall 4 and the outer wall 2 are substantially drum shaped but any alternative shape could equally be used. A drawstring 11 is provided on the hood 3 to tighten extremities of the inner and outer end walls of the hood 3 against the user's head. An adjustable chin strap 12 is also provided at the lower part of the hood 3 to further secure the hood 3 to the user's head.

In accordance with the invention, a plurality of holes 13 are provided on the inner wall 4 of the hood 3 for directing air onto and through the user's hair as will be described below. The holes 13 may be arranged in rows, columns or any combination of both. The holes 13 may be equidistantly spaced from one another, or concentrated in particular areas of the inner wall 4. Indeed, any type of distribution or combination of types of distributions can also be provided, depending on the manufacture or the requirements of the type of hair to be dried. For example, holes 13 may be arranged circumferentially, spirally, helically etc...

The number of holes 13 in the inner wall 4 of the hood 3 is above 75, preferably above 100, and most preferably above 140.

The number of holes 13 in the inner wall 4 of the hood is between 75 and 220, preferably between 105 and 190, and most preferably between 125 and 160. In a particularly preferred embodiment the number of holes 13 is exactly 147.

The holes 13 are substantially circular and have a diameter of between 5mm and 8mm, although, other shapes and other diameters could equally be used. For example, rectangular holes 13 may be used.

The hose 5 of the hood hair dryer attachment is 100cm in length. As remarked upon above, this gives the user greater freedom of movement while the hood hair dryer attachment is in use.

In accordance with the invention, the collar 6 of the hose 5 comprises a friction-enhancing material 9, in this case a ring, which is exposed on the inner surface of the collar 6. In use, the friction-enhancing material mounts the air delivery conduit 7 of the hair dryer 8. According to Figure 1, the friction-enhancing material 9 on the collar 6 of the hose 5 is silicone rubber. However, other types of friction-enhancing material 9 may be provided in embodiments not according to the invention.

The elastomeric material preferably has a high coefficient of friction so as to ensure that the hose 5 remains mounted to the hair dryer 8 when the apparatus is in use. The collar 6 is resiliently circumferentially expandable so it can be stretched an amount sufficient for it to envelop the air delivery conduit 7 of the hair dryer 8. In this way, the elastomeric material is mounted over the air delivery conduit 7 of the hair dryer 8 such that the mouth of the conduit 7 is enveloped in the collar 6 of the hose 5, and the outer surface of the conduit 7 is abutted by the inner surface of the silicone so that the hair dryer 8 is frictionally retained in the hose 5.

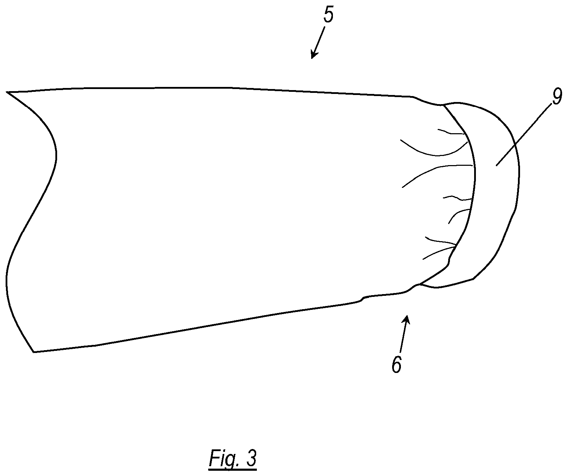

Figure 3 shows a side view of the collar 6 of the hose 5 of Figure 1. The hose 5 comprises a fabric material so as to allow for any movement necessary for mounting the collar 6 over a hair dryer (not shown), and to allow the user to position the hose in a comfortable position. The fabric is also preferably of a kind that can withstand the average temperature of hot air expelled from typical hairdryers so that the hose doesn't reach a temperature that would cause the user discomfort. The friction-enhancing material 9 is substantially toroidal and may be moulded, stitched, glued or otherwise attached to the collar 6 of the hose 5, depending on the manufacture.

The elastomeric material may be attached to or around the interior of the collar 6 of the hose 5, depending on the manufacture. The elastomeric material 9 is exposed so as to engage with the surface of the air delivery conduit 7 of the hair dryer 8. Pieces of elastomeric material 9 can also be glued, stitched or otherwise attached to the collar 6 of the hose 5. For example, a circumferential ring of spaced apart friction-enhancing dots or strips could be used.

As the air from the hair dryer 8 will typically be hot air used to dry the user's air, the elastomeric material is preferably heat-resilient. The low thermal conductivity of silicone rubber and its ability to form substantially airtight seals also ensure that the amount of hot air escaping through the collar 6 of the hose when mounted on the hair dryer 8 is reduced.

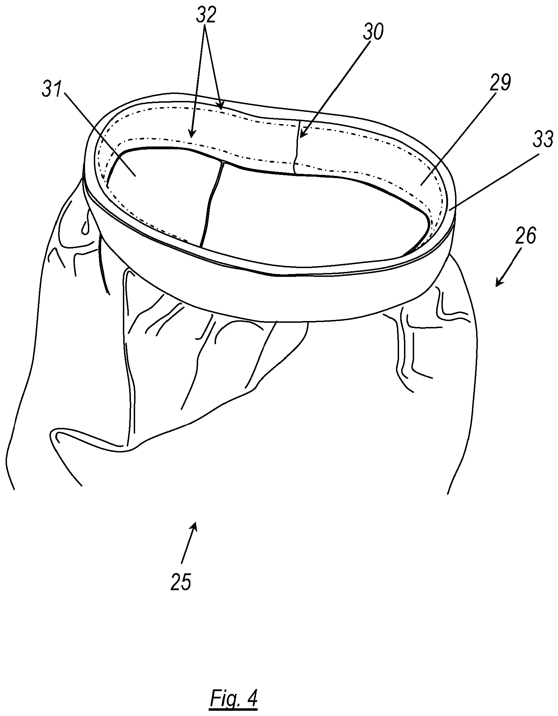

Figure 4 shows a perspective view of the collar 26 of a hose 25 according to a second embodiment of the present invention. At rest, the diameter of the mouth 31 of the hose is preferably equal to or slightly less than the diameter of the nozzle of the hand held hair dryer with which it is to be used so that the hair dryer is frictionally retained within the hose 25. For example, the hand held hairdryer may have a nozzle diameter of between about 30 and 45mm. It should be noted that the nozzle of a hand held hairdryer is not necessarily substantially circular and can be other shapes, for example ellipse, oval, or a generally curved shape. Such a shape can focus, or otherwise direct, the flow of air from the hand held hair dryer. The collar 26 is preferably sufficiently flexible to allow it to conform to such shapes.

In the embodiment shown in Figure 4, a strip of elasticated material 33 has been double-stitched around the inside wall of the collar. The elastomeric material 29 is a strip of silicone rubber that has been double-stitched around the mouth 31 of the hose 25 to the elasticated material 33. Here, by double-stitched it is meant two spaced apart, substantially parallel, continuous rows of stitches on opposing sides of the strip. The stiches of the elasticated material 29 are representatively illustrated by lines 32. One consequence of having a strip stitched to the inside of the hose 25 is that there is a gap 30 between the two ends of the stip. It is preferable to keep the gap or overlap as small as possible.

In one embodiment, the gap is 2mm when the mouth 31 of the hose 25 is in an unstretched, rest, configuration. In one embodiment, the gap is 4mm when the mouth 31 of the hose 25 is in a stretched configuration suitable for accepting the conduit of the hair dryer. Preferably the 'rest' gap is no more than 2mm and the 'stretched' gap is no more than 4mm.

The strip of elasticated material is 11mm wide and 45mm in diameter when in a substantially circular, closed, unstretched configuration, and the two rows of stitches are 6mm apart. However, it is to be understood that alternative widths, diameters, etc... could equally be used.

Although a strip of silicone rubber is shown in Figure 4, a silicone rubber ring, possibly moulded, could equally be used. Additionally, the ring may be glued, stitched or otherwise connected to the collar 26 of the hose 25 or the elasticated material 33 in keeping with the principles of the present disclosure. In one embodiment, the silicone rubber ring is 45mm in diameter, 8mm wide and 0.7mm thick. In one embodiment the silicone rubber ring is double-stitched around the inside wall of the collar 26. In another embodiment, the stitches are 6mm apart. However, it should be understood that other dimensions could also be used.

Although an elasticated material is shown in Figure 4, in an unclaimed embodiment a substantially rigid silicone rubber ring could be used, without the elasticated material. This results in a collar less circumferentially expandable than that comprising the elasticated material. In this embodiment, the diameter of the mouth of the hose is equal to or slightly less than the diameter of the nozzle of the hair dryer. When the collar circumferentially deforms back to its rest configuration, the hair dryer is tightly retained in the mouth of the collar.

Referring again to Figure 1, when the apparatus is to be used, the user will place the hood 3 of the hood hair dryer attachment in a vertical orientation over their head, such that the inner wall 4 of the hood 3 substantially abuts the user's head and/or hair, as is representatively illustrated. The hood 3 should be placed such that substantially all of the front, back and sides of the user's hair are enveloped by the hood 3, but the hood 3 should not envelop the user's eyes. The user tightens the drawstring so as to press fit the hood 3 to their head at the user's hairline, and secures the hood 3 to their head using the adjustable chin strap 12.

The collar 6 of the hose 5 can then be mounted onto the air delivery conduit 7 of a hair dryer 8. When switched on, hot air from the hair dryer 8 enters the hood 3 via the hose 5. The hot air is then directed into and circulated through the air channel of the hood defined in between the inner and outer walls of the hood. The hot air then exits the hood 3 through the plurality of holes in the inner wall 4 and will be directed into and through the hair of the user. The amount of holes provided in the inner wall 4 ensures an efficient, uniform distribution of heat across the user's hair eliminating the localised hot spots that are a problem in the art.

In this way, the apparatus causes complete circulation of hot air through the user's hair, thereby drying the user's hair in a quick and efficient manner.

Risk of the apparatus overheating is reduced using the ventilation holes 10 as described above, and/or holes a ventilation structure in the outer wall 2 of the hood 3. Small air leakage through any gaps between the hood 3 and the user's head may also allow hot air from the hood 3 to escape.

The length of the hose 5 is sufficient to allow the user to rest the hair dryer on a nearby surface without the risk of the tension in the hose 5 pulling the hair dryer 8 off. Additionally, any bending or kinking in the hose 5 will not result in a backpressure event that will cause the hose 5 to detach from the hair dryer 8, since it will remain frictionally retained in the friction-enhancing material 9.

The invention thus provides for a hood hair dryer attachment which can be easily and comfortably used to dry the user's hair. The attachment is easily used with a reduced risk of the hair dryer becoming detached.

The invention is not considered to be limited to the configurations and materials described in the embodiments above, but is defined by the appended claims. The configuration of the structure as well as the dimensions and, to a certain extent, the material would be dependent on a specific application. For example, the outer and inner wall may be of different shapes to those described herein, and additional materials may be incorporated into the attachment to provide additional insulation, resilience and/or strength etc...

## Claims

1. A hood hair dryer attachment (1) comprising:
a hood (3) for covering at least a part of a head of a user, the hood (3) having spaced apart inner (4) and outer (2) walls defining an air channel (14) there between, wherein the inner wall (4) comprises a plurality of holes (13) for directing air from the air channel (14) onto a head of a user;
a hose (5) connected at a first end to the outer wall of the hood (3) and in communication with the air channel (14), said hose (5) comprising a collar (6)
at a second end for mounting to an air delivery conduit (7) of a hair dryer (8), said collar (6) being resiliently circumferentially expandable, the hood hair dryer attachment **characterized by** further comprising a friction-enhancing material exposed on an inner surface of the collar (6) for contacting a surface of the air delivery conduit (7) of a hair dryer (8); and
wherein the friction-enhancing material comprises a ring, or strip, of silicone rubber (9) stitched or glued into the inside surface of the collar (6) of the hose (5).

2. A hood hair dryer attachment as claimed in claim 1 further comprising a flexible material.

3. A hood hair dryer attachment as claimed in any one of the preceding claims, wherein the inner wall of the hood is substantially drum shaped with a dome shaped crown.

4. A hood hair dryer attachment as claimed in any one of the preceding claims, wherein the outer wall of the hood is substantially drum shaped with a dome shaped crown.

5. A hood hair dryer attachment as claimed in any one of the preceding claims, wherein the plurality of holes in the inner wall comprises holes substantially equidistantly spaced apart.

6. A hood hair dryer attachment as claimed in any one of the preceding claims, wherein the number of holes is above 75.

7. A hood hair dryer attachment as claimed in any one of the preceding claims, wherein the number of holes is between 75 and 200.

8. A hood hair dryer attachment as claimed in any one of the preceding claims, wherein the length of the hose is at least 80cm.

9. A hood hair dryer attachment as claimed in any one of the preceding claims, further comprising an adjustable chin strap for securing the hood to the head of the wearer.

10. A hood hair dryer attachment as claimed in any one of the preceding claims, wherein the hood comprises a drawstring for tightening a base of the hood.

11. A method of attaching a hood hair dryer attachment (1) to a hand held hair dryer (8), **characterized in that** the hood hair dryer attachment is a hood hair dryer attachment according to claim 1, the method comprising the step of mounting the means at the second end of the hose (5) over an air delivery conduit of a hand held hair dryer;
wherein the hand held hair dryer is frictionally retained in the second end of the hose by the collar (6).

## Patentansprüche

1. Haartrocknerhaubenaufsatz (1), umfassend:
eine Haube (3) zum Bedecken zumindest eines Teils eines Kopfes eines Benutzers, wobei die Haube (3) eine voneinander beabstandete innere (4) und äußere (2) Wand aufweist, die dazwischen einen Luftkanal (14) definieren, wobei die Innenwand (4) eine Vielzahl von Lüftungsschlitzen (13) zum Richten von Luft aus dem Luftkanal (14) auf einen Kopf eines Benutzers aufweist;
einen Schlauch (5), der an einem ersten Ende an der Außenwand der Haube (3) angeschlossen ist und mit dem Luftzufuhrkanal (14) in Verbindung steht, wobei der Schlauch (5) an einem zweiten Ende eine Manschette (6) zur Befestigung an einer Luftzufuhrleitung (7) eines Haartrockners (8) umfasst, wobei die Manschette (6) elastisch in Umfangsrichtung dehnbar ist, wobei der Haartrocknerhaubenaufsatz **dadurch gekennzeichnet ist, dass** er ferner ein reibungserhöhendes Material umfasst, das auf einer Innenfläche der Manschette (6) zur Berührung einer Oberfläche des Luftzufuhrkanals (7) eines Haartrockners (8) freiliegt; und
wobei das reibungserhöhende Material einen Ring oder Streifen aus Silikonkautschuk (9) umfasst, der in die Innenfläche der Manschette (6) des Schlauchs (5) eingenäht oder eingeklebt ist.

2. Haartrocknerhaubenaufsatz nach Anspruch 1, ferner umfassend ein flexibles Material.

3. Haartrocknerhaubenaufsatz nach einem der vorhergehenden Ansprüche, wobei die Innenwand der Haube im Wesentlichen trommelförmig mit einer kuppelförmigen Krone ist.

4. Haartrocknerhaubenaufsatz nach einem der vorhergehenden Ansprüche, wobei die Außenwand der Haube im Wesentlichen trommelförmig mit einer kuppelförmigen Krone ist.

5. Haartrocknerhaubenaufsatz nach einem der vorhergehenden Ansprüche, wobei die Vielzahl von Luftschlitzen in der Innenwand Luftschlitze umfasst, die im Wesentlichen gleich voneinander beabstandet sind.

6. Haartrocknerhaubenaufsatz nach einem der vorhergehenden Ansprüche, wobei die Anzahl der Luftschlitze bei über 75 liegt.

7. Haartrocknerhaubenaufsatz nach einem der vorhergehenden Ansprüche, wobei die Anzahl der Luftschlitze bei zwischen 75 und 200 liegt.

8. Haartrocknerhaubenaufsatz nach einem der vorhergehenden Ansprüche, wobei die Länge des Schlauchs mindestens 80 cm beträgt.

9. Haartrocknerhaubenaufsatz nach einem der vorhergehenden Ansprüche, ferner umfassend einen verstellbaren Kinnriemen zum Befestigen der Haube am Kopf des Trägers.

10. Haartrocknerhaubenaufsatz nach einem der vorhergehenden Ansprüche, wobei die Haube einen Tunnelzug zum Festziehen einer Basis der Haube umfasst.

11. Verfahren zum Befestigen eines Haartrocknerhaubenaufsatzes (1) an einem Handhaartrockner (8), **dadurch gekennzeichnet, dass** der Haartrocknerhaubenaufsatz ein Haartrocknerhaubenaufsatz nach Anspruch 1 ist, das Verfahren umfassend den Schritt des
Befestigens der Einrichtung am zweiten Ende des Schlauchs (5) über einen Luftzufuhrkanal eines Handhaartrockners;
wobei der Handhaartrockner durch die Manschette (6) im zweiten Ende des Schlauchs reibschlüssig gehalten wird.

## Revendications

1. Attache de sèche-cheveux à capuche (1) comprenant :
une capuche (3) pour couvrir au moins une partie de la tête d'un utilisateur, la capuche (3) ayant des parois intérieures (4) et extérieures (2) espacées définissant un canal d'air (14) entre elles, dans laquelle la paroi intérieure (4) comprend une pluralité de trous (13) pour diriger l'air du canal d'air (14) sur la tête d'un utilisateur ;
un tuyau (5) raccordé au niveau d'une première extrémité à la paroi extérieure de la capuche (3) et en communication avec le canal d'air (14), ledit tuyau (5) comprenant un collier (6) au niveau d'une deuxième extrémité pour le montage à un conduit de distribution d'air (7) d'un sèche-cheveux (8), ledit collier (6) étant extensible de manière résistante et circonférentielle, l'attache de sèche-cheveux à capuche étant **caractérisé en ce qu'**il comprend en outre un matériau améliorant les frottements sur une surface intérieure du collier (6) pour être en contact avec une surface du conduit de distribution d'air (7) d'un sèche-cheveux (8) ; et
dans laquelle le matériau améliorant les frottements comprend une bague, ou une bande, de caoutchouc de silicone (9) cousue ou collée dans la surface intérieure du collier (6) du tuyau (5).

2. Attache de sèche-cheveux à capuche selon la revendication 1, comprenant en outre un matériau flexible.

3. Attache de sèche-cheveux à capuche selon l'une quelconque des revendications précédentes, dans laquelle la paroi intérieure de la capuche est sensiblement en forme de tambour avec une couronne en forme de dôme.

4. Attache de sèche-cheveux à capuche selon l'une quelconque des revendications précédentes, dans laquelle la paroi extérieure de la capuche est sensiblement en forme de tambour avec une couronne en forme de dôme.

5. Attache de sèche-cheveux à capuche selon l'une quelconque des revendications précédentes, dans laquelle la pluralité de trous dans la paroi intérieure comprend des trous sensiblement espacés de manière équidistante.

6. Attache de sèche-cheveux à capuche selon l'une quelconque des revendications précédentes, dans laquelle le nombre de trous est supérieur à 75.

7. Attache de sèche-cheveux à capuche selon l'une quelconque des revendications précédentes, dans laquelle le nombre de trous est entre 75 et 200.

8. Attache de sèche-cheveux à capuche selon l'une quelconque des revendications précédentes, dans laquelle la longueur du trou est d'au moins 80 cm.

9. Attache de sèche-cheveux à capuche selon l'une quelconque des revendications précédentes, comprenant en outre une mentonnière réglable pour fixer la capuche à la tête du porteur.

10. Attache de sèche-cheveux à capuche selon l'une quelconque des revendications précédentes, dans laquelle la capuche comprend un cordon de serrage pour serrer une base de la capuche.

11. Procédé de fixation d'une attache de sèche-cheveux à capuche (1) sur un sèche-cheveux à main (8), **caractérisé en ce que** l'attache de sèche-cheveux à capuche est une attache de sèche-cheveux à capuche selon la revendication 1, le procédé comprenant l'étape de montage du moyen au niveau de la deuxième extrémité du tuyau (5) sur un conduit de distribution d'air d'un sèche-cheveux à main ;
dans lequel le sèche-cheveux à main est maintenu par frottement dans la deuxième extrémité du tuyau par le collier (6).
